# FASCICULE DE BREVET EUROPEEN

(11) **EP 0 652 127 B1**
(45) Date de publication et mention de la délivrance du brevet: **07.01.1998**
(21) Numéro de dépôt: 94402219.3
(22) Date de dépôt: 04.10.1994
(51) Int. Cl.: B60K 15/077

(54) **Dispositif de puisage de carburant dans un réservoir de véhicule automobile**
Kraftstoffzufuhrvorrichtung in einem Fahrzeugtank
Fuel feed arrangement in a vehicle fuel tank

(30) Priorité: 08.11.1993 FR 9313275
(43) Date de publication de la demande: 10.05.1995
(73) Titulaire: AUTOMOBILES PEUGEOT, 75116 Paris (FR); AUTOMOBILES CITROEN, 92200 Neuilly-sur-Seine (FR)
(72) Inventeur: Poitevin, Bertrand, F-45430 Checy (FR)
(74) Mandataire: Polus, Camille

(56) Documents cités:
- EP-A- 0 463 567
- US-A- 4 951 699
- US-A- 5 020 566
- US-A- 5 163 466
- US-A- 5 197 443
- US-A- 5 236 000
- PATENT ABSTRACTS OF JAPAN vol. 12, no. 332 (M-738) (3179) 8 Septembre 1988 & JP-A-63 093 626 (DAIHATSU MOTOR CO., LTD.) 23 Avril 1988

## Description

La présente invention concerne un dispositif de puisage de carburant dans un réservoir de véhicule automobile.

Ce dispositif permet d'acheminer du carburant jusqu'au moteur du véhicule automobile.

On connaît déjà dans l'état de la technique un dispositif de puisage de carburant comportant un conduit d'aspiration raccordé à des moyens de pompage du carburant, dont l'extrémité est disposée au voisinage du fond du réservoir.

Pour des raisons d'encombrement, le réservoir de carburant a souvent une forme allongée dans une direction longitudinale ou transversale du véhicule automobile.

Lorsque le véhicule automobile se déplace sur une route en pente, le réservoir de carburant s'incline par rapport à un plan horizontal et le volume de carburant contenu dans le réservoir se déplace vers l'extrémité la plus basse de ce dernier. L'inclinaison du réservoir a pour effet, lorsque le réservoir de carburant est presque vide et lorsque la partie du réservoir la plus haute est celle où se trouve l'extrémité du conduit d'aspiration de carburant, de mettre à sec cette extrémité et de provoquer rapidement l'arrêt du moteur par défaut d'alimentation en carburant.

Pour remédier à cet inconvénient, on a proposé un dispositif de puisage de carburant dans un réservoir de véhicule automobile, du type comportant deux ensembles d'aspiration, disposés au voisinage du fond du réservoir en étant écartés l'un de l'autre.

Cependant, les dispositifs de puisage de ce type proposés dans l'état de la technique sont relativement complexes et ne donnent pas entière satisfaction.

EP-A-0 463 567 décrit un dispositif de puisage de carburant dans un réservoir de véhicule automobile, du type comportant deux orifices d'aspiration raccordés à des moyens de pompage du carburant, disposés au voisinage du fond du réservoir en étant écartés l'un de l'autre, un conduit principal et deux conduits secondaires d'aspiration de carburant raccordés entre eux par un embranchement, les extrémités libres des conduits secondaires formant les orifices d'aspiration du carburant, un répartiteur de débit de carburant déplaçable, à l'intérieur de l'embranchement, parallèlement à un axe d'alignement des extrémités de raccordement des conduits secondaires d'aspiration et sensiblement parallèlement à l'alignement des deux orifices d'aspiration, entre deux positions extrêmes d'obturation maximale de l'un ou l'autre des conduits secondaires d'aspiration, et des moyens de déplacement du répartiteur en fonction d'une force agissant sur le réservoir pour déplacer le carburant vers l'un des orifices d'aspiration de manière que le débit de carburant provenant de l'autre des orifices d'aspiration soit plus faible que celui provenant du premier.

L'invention a pour but de proposer un dispositif permettant de puiser du carburant à deux endroits écartés l'un de l'autre à l'intérieur d'un réservoir, ceci avec des moyens simples et fiables permettant d'éviter notamment d'aspirer de l'air lorsque l'un des endroits de puisage est à sec.

A cet effet l'invention a pour objet un dispositif de puisage de carburant dans un réservoir de véhicule automobile, du type décrit dans EP-A-0 463 567, caractérisé en ce que le répartiteur est réalisé dans un matériau ferreux, les moyens de déplacement du répartiteur comprenant un balancier disposé à l'extérieur de l'embranchement, monté pivotant autour d'un axe sensiblement perpendiculaire à l'alignement des orifices d'aspiration, en équilibre stable dans sa position verticale, ce balancier comportant une extrémité disposée à proximité de l'embranchement, munie d'un aimant, de manière que le déplacement du balancier sous l'effet de la force agissant sur le réservoir provoque, par attraction magnétique, le déplacement du répartiteur dans la direction inverse de celle de ladite force.

Suivant d'autres caractéristiques de l'invention:
- les extrémités de raccordement des conduits secondaires d'aspiration ont des sections internes circulaires, et le répartiteur comporte un disque fixé en son centre sur une tige dont les extrémités, de part et d'autre du disque, sont montées coulissantes dans des paliers ajourés pour permettre le passage du carburant, fixés dans les extrémités de raccordement des conduits secondaires d'aspiration ;
- chaque orifice d'aspiration est entouré d'une enceinte communiquant avec le reste du réservoir, formant retenue de carburant, et le dispositif de puisage comporte de plus un conduit principal de refoulement de carburant non consommé raccordé par un embranchement à deux conduits secondaires de refoulement de carburant de manière à répartir ce carburant dans les conduits secondaires de refoulement selon des débits sensiblement égaux, les conduits secondaires de refoulement comportant des extrémités libres débouchant, à l'intérieur des enceintes, de manière à alimenter ces dernières en carburant quelle que soit la force exercée sur le réservoir ;
- les conduits secondaires et principal d'aspiration de carburant sont reliés entre eux par un embranchement en T ;
- les conduits secondaires et principal de refoulement de carburant sont reliés entre eux par un embranchement en T ;
- les orifices d'aspiration sont entourés par des crépines destinées à filtrer le carburant.

Un exemple de réalisation de l'invention sera décrit ci-dessous en se référant aux dessins annexés dans lesquels :
- la figure 1 est une vue schématique d'un réservoir de carburant de véhicule automobile comportant un dispositif de puisage selon l'invention ;
- la figure 2 est une vue de détail de la figure 1 montrant un boîtier dans lequel sont montés les embranchements des conduits d'aspiration et de refoulement de carburant.

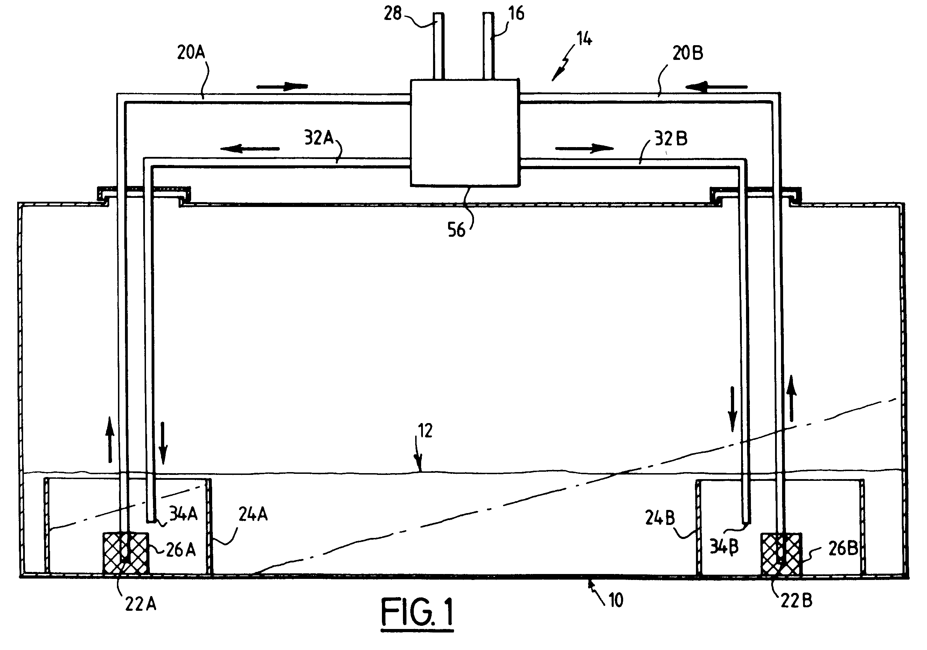

On a représenté sur la figure 1 un réservoir de carburant désigné par la référence générale 10, monté de façon classique sur un véhicule automobile.

Ce réservoir 10 comporte une quantité de carburant qui peut être, selon la motorisation du véhicule, du gazole ou de l'essence, dont on a représenté la surface libre 12 en trait plein lorsque le véhicule et le réservoir 10 sont dans une position sensiblement horizontale.

Le réservoir 10 a une forme générale allongée dans la direction longitudinale du véhicule qui est parallèle au plan de la figure 1.

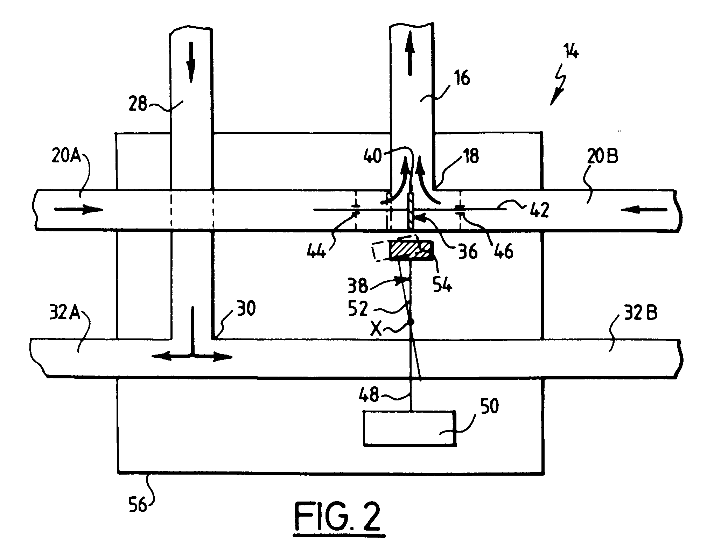

On a également représenté sur la figure 1 un dispositif selon l'invention, désigné par la référence générale 14, destiné à puiser du carburant contenu dans le réservoir 10, ce dispositif 14 étant montré plus en détail sur la figure 2.

En se référant aux figures 1 et 2, on voit que le dispositif de puisage 14 comporte un conduit principal 16 d'aspiration de carburant dont une extrémité est raccordée à des moyens de pompage de carburant, de type connu, non représentés sur les figures, et dont l'autre extrémité est raccordée par un embranchement 18 en T à deux conduits secondaires 20A,20B d'aspiration de carburant.

Les extrémités de raccordement des deux conduits secondaires d'aspiration 20A,20B sont sensiblement coaxiales et les extrémités libres de ces conduits sont disposées à l'intérieur du réservoir 10 de manière à former des orifices 22A,22B d'aspiration du carburant. Ces orifices sont disposés au voisinage du fond du réservoir en étant écartées l'une de l'autre et alignés suivant une direction parallèle à la plus grande dimension du réservoir 10.

Chaque orifice d'aspiration 22A,22B est entouré d'une enceinte 24A,24B communiquant de façon connue en soi avec le reste du réservoir 10, formant une retenue de carburant lorsque ce réservoir s'incline, comme cela sera décrit plus en détail par la suite.

De plus, chaque orifice d'aspiration 22A,22B est muni d'une crépine 26A,26B, disposée à l'intérieur de l'enceinte 24A,24B correspondante, destinée à filtrer le carburant s'écoulant dans ledit orifice.

Le dispositif de puisage 14 comporte de plus un conduit principal 28 de refoulement de carburant non consommé par le moteur, muni d'une extrémité raccordée par un embranchement 30 en T à deux conduits secondaires 32A,32B de refoulement de manière à répartir le carburant provenant du conduit principal 28 dans les conduits secondaires 32A,32B suivant des débits sensiblement égaux.

Les extrémités libres 34A,34B des conduits secondaires de refoulement 32A,32B débouchent à proximité des orifices d'aspiration 22A,22B, à l'intérieur des enceintes 24A,24B.

En se référant à la figure 2, on voit que le dispositif de puisage 14 comporte de plus un répartiteur de débit 36 déplaçable à l'intérieur de l'embranchement 18 entre deux positions extrêmes d'obturation maximale de l'un ou l'autre des conduits secondaires d'aspiration 20A,20B, et des moyens 38 de déplacement du répartiteur 36 en fonction de l'inclinaison du réservoir 10 par rapport à un plan horizontal.

De préférence, comme dans l'exemple représenté sur les figures, les extrémités de raccordement des conduits secondaires 20A,20B d'aspiration ont des sections internes circulaires et le répartiteur 36 comporte un disque 40, réalisé dans un matériau ferreux, adapté pour coulisser dans l'embranchement 18 parallèlement à l'axe d'alignement des extrémités de raccordement des conduits secondaires 20A,20B. A cet effet, le disque 40 est fixé en son centre sur un tige 42 dont les extrémités, de part et d'autre du disque, sont montées coulissantes dans des paliers 44,46 ajourés pour permettre le passage du carburant, fixés dans les extrémités de raccordement des conduits secondaires 20A,20B. L'axe de déplacement du disque 40 est sensiblement parallèle à l'alignement des deux bouches d'aspiration 22A,22B.

Les moyens de déplacement du répartiteur 36 comprennent un balancier 38, disposé à l'extérieur de l'embranchement 18, monté pivotant autour d'un axe X sensiblement perpendiculaire à la tige 42 et à l'alignement des orifices d'aspiration 22A,22B, en équilibre stable dans sa position verticale.

Le bras du balancier 38 comporte une partie inférieure 48 dont l'extrémité libre est munie d'une masse 50, et une partie supérieure 52, dont l'extrémité libre porte un aimant 54, situé au dessus de la masse 50 en position d'équilibre du balancier.

Le balancier 38 est placé par rapport à l'embranchement 18 de manière que, lorsque le réservoir est dans une position horizontale, l'aimant 54 attire le disque magnétique 36 vers une position médiane d'équirépartition des débits de carburant provenant des conduits secondaires d'aspiration 20A,20B.

De préférence, les embranchements 18,30 et le balancier 38 sont disposés à l'intérieur d'un boîtier 56, comme cela est représenté sur les figures.

On décrira ci-dessous le fonctionnement du dispositif de puisage de carburant selon l'invention, en se référant aux figures dans lesquelles le sens d'écoulement du carburant est indiqué par des flèches sans référence.

Lorsque le véhicule se déplace à vitesse sensiblement constante, sur une route horizontale, le réservoir 10 est horizontal et le niveau de carburant autour des deux orifices d'aspiration 22A,22B est à peu près identique. Le répartiteur 36 est dans sa position médiane d'équirépartition des débits si bien que le conduit principal d'aspiration 16 est alimenté par des quantités de carburant identiques provenant des deux orifices d'aspiration 22A,22B respectivement.

Lorsque le véhicule roule sur une route en pente, le réservoir 10 s'incline par rapport à un plan horizontal et, sous l'effet de la gravité, le carburant se déplace vers l'extrémité la plus basse de ce réservoir.

Sur la figure 1, on a représenté en trait mixte la surface libre du carburant lorsque le réservoir 10 est incliné de manière que son extrémité arrière (à gauche) soit plus haute que son extrémité avant (à droite).

Lorsque la pente est relativement forte et lorsqu'il ne reste pas suffisamment de carburant dans le réservoir 10, la zone entourant l'enceinte 24A disposée à l'extrémité la plus haute du réservoir s'assèche. Cependant, il subsiste un petit volume de carburant à l'intérieur de cette enceinte 24A.

Par ailleurs, la masse 50 du balancier 38 va se déplacer dans le sens où s'exerce la force de gravité, de sorte que l'aimant 54 va tourner dans le sens opposé. Le répartiteur 36 se déplace alors dans l'embranchement 18, sous l'effet de l'attraction magnétique de l'aimant 54, vers sa position d'obturation maximale du conduit secondaire 20A relié à l'orifice d'aspiration 22A le plus haut, comme cela est représenté en trait mixte sur la figure 2.

De cette façon le débit de carburant est presque intégralement fourni par le conduit secondaire 20B relié à l'orifice d'aspiration le plus bas, situé dans une zone du réservoir où se trouve la plus grande quantité de carburant.

Dans le cas où le répartiteur 36 n'est pas parfaitement étanche, une faible quantité de carburant peut s'écouler par le conduit d'aspiration 20A. Elle est fournie par le volume de carburant contenu dans l'enceinte 24A qui est, par ailleurs, réapprovisionnée par le conduit secondaire 32A de refoulement de carburant non consommé, le carburant refoulé provenant du conduit principal 28 étant réparti en quantités égales dans les deux conduits secondaires 32A,32B de refoulement indépendamment de l'inclinaison du réservoir.

La quantité de carburant présente dans l'enceinte 24A la plus haute, lorsque le réservoir 10 est incliné, est ainsi généralement suffisante pour le faible débit éventuellement imposé par le répartiteur 36, et pour éviter que l'enceinte ne se vide trop rapidement sous l'effet de la pesanteur.

Lorsque le véhicule roule à nouveau sur une route horizontale, le carburant se répartit suivant une hauteur sensiblement uniforme dans tout le réservoir et les enceintes de retenue de carburant 26A,26B se remplissent par effet de vases communicants.

Bien entendu, le dispositif de puisage selon l'invention fonctionne de façon analogue à ce qui vient d'être décrit lorsque le véhicule automobile subit une accélération ou une décélération ayant tendance à déplacer le volume de carburant contenu dans le réservoir vers une extrémité de ce dernier, sans que celui-ci soit incliné.

L'invention ne se limite pas au mode de réalisation décrit et représenté sur les figures.

En particulier, l'invention peut s'appliquer à des réservoirs allongés dans une direction transversale du véhicule. Dans ce cas, les orifices d'aspiration sont alignés parallèlement à cette direction transversale et l'axe de pivotement du balancier est parallèle à la direction longitudinale du véhicule. Le dispositif permet alors d'éviter les effets, sur le niveau de carburant, des accélérations transversales du véhicule.

Le conduit principal 16 d'aspiration de carburant n'est pas nécessairement raccordé de façon perpendiculaire aux deux conduits secondaires 20A,20B d'aspiration de carburant. En particulier, l'extrémité de raccordement du conduit principal peut être inclinée par rapport à l'axe des extrémités de raccordement des conduits secondaires.

L'invention comporte de nombreux avantages.

En particulier, elle permet de maintenir l'alimentation en carburant d'un moteur de véhicule automobile lorsqu'il reste un faible volume de carburant dans le réservoir, ce volume se déplaçant vers une des extrémités du réservoir sous l'effet de l'inclinaison du véhicule ou sous l'effet d'une accélération ou décélération du véhicule.

Par ailleurs, les enceintes de retenue de carburant, continuellement réapprovisionnées par les conduits de refoulement de carburant non consommé, permettent d'obtenir un débit minimum de carburant dans le conduit secondaire d'aspiration relié à l'orifice d'aspiration autour duquel le niveau de carburant est le plus bas, de manière à éviter l'aspiration d'air par ce conduit secondaire.

## Revendications

1. Dispositif de puisage de carburant dans un réservoir (10) de véhicule automobile, du type comportant
deux orifices d'aspiration (22A,22B) raccordés à des moyens de pompage du carburant, disposés au voisinage du fond du réservoir (10) en étant écartés l'un de l'autre,
un conduit principal (16) et deux conduits secondaires (20A,20B) d'aspiration de carburant raccordés entre eux par un embranchement (18), les extrémités libres (22A,22B) des conduits secondaires (20A,20B) formant les orifices d'aspiration du carburant, un répartiteur (36) de débit de carburant déplaçable, à l'intérieur de l'embranchement (18), parallèlement à un axe d'alignement des extrémités de raccordement des conduits secondaires d'aspiration (20A,20B) et sensiblement parallèlement à l'alignement des deux orifices d'aspiration (22A,22B), entre deux positions extrêmes d'obturation maximale de l'un ou l'autre des conduits secondaires d'aspiration (20A,20B),
et des moyens (38) de déplacement du répartiteur (36) en fonction d'une force agissant sur le réservoir pour déplacer le carburant vers l'un des orifices d'aspiration (22A,22B) de manière que le débit de carburant provenant de l'autre des orifices d'aspiration (22B,22A) soit plus faible que celui provenant du premier,
caractérisé en ce que le répartiteur (36) est réalisé dans un matériau ferreux, les moyens de déplacement du répartiteur (36) comprenant un balancier (38) disposé à l'extérieur de l'embranchement (18), monté pivotant autour d'un axe (X) sensiblement perpendiculaire à l'alignement des orifices d'aspiration (22A,22B), en équilibre stable dans sa position verticale, ce balancier (38) comportant une extrémité disposée à proximité de l'embranchement (18), munie d'un aimant (54), de manière que le déplacement du balancier (38) sous l'effet de la force agissant sur le réservoir (10) provoque, par attraction magnétique, le déplacement du répartiteur (36) dans la direction inverse de celle de ladite force.

2. Dispositif selon la revendication 1, caractérisé en ce que les extrémités de raccordement des conduits secondaires d'aspiration (20A,20B) ont des sections internes circulaires, et en ce que le répartiteur (36) comporte un disque (40) fixé en son centre sur une tige (42) dont les extrémités, de part et d'autre du disque, sont montées coulissantes dans des paliers (44,46) ajourés pour permettre le passage du carburant, fixés dans les extrémités de raccordement des conduits secondaires d'aspiration (20A,20B).

3. Dispositif selon la revendication 1 ou 2, caractérisé en ce que chaque orifice d'aspiration (22A, 22B) est entouré d'une enceinte (24A,24B) communiquant avec le reste du réservoir (10), formant retenue de carburant, et en ce qu'il comporte de plus un conduit principal (28) de refoulement de carburant non consommé raccordé par un embranchement (30) à deux conduits secondaires (32A,32B) de refoulement de carburant de manière à répartir ce carburant dans les conduits secondaires de refoulement (32A,32B) selon des débits sensiblement égaux, les conduits secondaires de refoulement (32A,32B) comportant des extrémités libres débouchant, à l'intérieur des enceintes (24A,24B), de manière à alimenter ces dernières en carburant quelle que soit la force exercée sur le réservoir (10).

4. Dispositif selon l'une quelconque des revendications précédentes, caractérisé en ce que les conduits secondaires (20A,20B) et principal (16) d'aspiration de carburant sont reliés entre eux par un embranchement en T.

5. Dispositif selon l'une quelconque des revendications précédentes, caractérisé en ce que les conduits secondaires (32A,32B) et principal (28) de refoulement de carburant sont reliés entre eux par un embranchement en T.

6. Dispositif selon l'une quelconque des revendications précédentes, caractérisé en ce que les orifices d'aspiration (22A,22B) sont entourés par des crépines (26A,26B) destinées à filtrer le carburant.

## Claims

1. Device for drawing up fuel from a tank (10) of a motor vehicle, of the type comprising
two intake orifices (22A, 22B) connected to means of pumping the fuel and disposed in the vicinity of the bottom of the tank (10) and being separated from one another,
a main pipe (16) and two secondary pipes (20A, 20B) for the intake of fuel connected with each other by a junction (18), the free ends (22A, 22B) of the secondary pipes (20A, 20B) forming intake orifices for the fuel, a fuel flow distributor (36) which is displaceable, inside the junction (18), in a direction parallel with an axis of alignment of the connection ends of the secondary intake pipes (20A, 20B) and substantially parallel with the alignment of the two intake orifices (22A, 22B), between two extreme positions of maximum obturation of one or other of the secondary intake pipes (20A, 20B),
and means (38) of displacing the distributor (36) according to a force acting on the tank which displaces the fuel towards one of the intake orifices (22A, 22B) in such a way that the fuel flow coming from the other of the intake orifices (22B, 22A) is lower than that coming from the first one,
characterized in that the distributor (36) is made from a ferrous material, the means of displacing the distributor (36) comprising a rocker arm (38) disposed outside of the junction (18), mounted in a pivoting manner about an axis (X) substantially perpendicular to the alignment of the intake orifices (22A, 22B), in stable equilibrium in its vertical position, this rocker arm (38) comprising one end disposed in the vicinity of the junction (18), provided with a magnet (54) such that the displacement of the rocker arm (38) under the effect of the force acting on the tank (10) causes, by magnetic attraction, the displacement of the distributor (36) in the direction opposite to that of the said force.

2. Device according to Claim 1, characterized in that the connection ends of the secondary intake pipes (20A, 20B) have circular internal cross-sections, and in that the distributor (36) comprises a disk (40) fixed at its centre onto a rod (42) whose ends, on either side of the disk, are slidingly mounted in bearings (44, 46) having openings to allow the passage of the fuel, fixed in the connection ends of the secondary intake pipes (20A, 20B).

3. Device according to Claim 1 or 2, characterized in that each intake orifice (22A, 22B) is surrounded by an enclosure (24A, 24B) connected with the rest of the tank (10) forming a fuel reserve, and in that it furthermore comprises a main pipe (28) for delivering unconsumed fuel connected by a junction (30) to two secondary fuel delivery pipes (32A, 32B) in such a way as to distribute this fuel in the secondary delivery pipes (32A, 32B) with substantially equal flow rates, the secondary fuel delivery pipes (32A, 32B) comprising free ends emerging, inside the enclosures (24A, 24B), in such a way as to supply the latter with fuel whatever may be the force applied to the tank (10).

4. Device according to any one of the preceding claims, characterized in that the secondary (20A, 20B) and main (16) fuel intake pipes are connected with each other by a T-junction.

5. Device according to any one of the preceding claims, characterized in that the secondary (32A, 32B) and main (28) fuel delivery pipes are connected with each other by a T-junction.

6. Device according to any one of the preceding claims, characterized in that the intake orifices (22A, 22B) are surrounded by strainers (26A, 26B) intended to filter the fuel.

## Patentansprüche

1. Vorrichtung zum Zapfen von Treibstoff aus einem Behälter (10) eines Kraftfahrzeugs, bestehend aus
zwei Ansaugöffnungen (22A, 22B), die an Mittel zum Pumpen des Treibstoffes angeschlossen sind, die in der Nahe des Bodens des Behälters (10) voneinander entfernt angeordnet sind,
einer Hauptleitung (16) und zwei Nebenleitungen (20A, 20B) zum Ansaugen von Treibstoff, die miteinander durch eine Abzweigung (18) verbunden sind, wobei die freien Enden (22A, 22B) der Nebenleitungen (20A, 20B) die Ansaugöffnungen für den Treibstoff bilden, einem Verteiler (36) der Treibstoffdurchflußmenge, dar innerhalb der Abzweigung (18) parallel zu einer Ausrichtungsachse der Anschlußenden der Nebenansaugleitungen (20A, 20B) und im wesentlichen parallel zur Ausrichtung der beiden Ansaugöffnungen (22A, 22B) zwischen zwei äußersten Positionen des maximalen Verschlusses der einen oder der anderen Nebenansaugleitung (20A, 20B) verschiebbar ist,
und Mitteln (38) zum Verschieben des Verteilers (36) in Abhängigkeit von einer Kraft, die auf den Behälter einwirkt, um den Treibstoff zu einer der Ansaugöffnungen (22A, 22B) zu leiten, so daß die Treibstoffmenge, die von der anderen der Ansaugöffnungen (22B, 22A) kommt, kleiner als die von der ersten kommende ist,
dadurch gekennzeichnet, daß der Verteiler (36) aus einem eisenhaltigen Material hergestellt ist, wobei die Mittel zum Verschieben des Verteilers (36) einen Schwinghebel (38) umfassen, der außerhalb der Verzweigung (18) angeordnet und schwenkbar um eine Achse (X) im wesentlichen senkrecht auf die Ausrichtung der Ansaugöffnungen (22A, 22B) im stabilen Gleichgewicht in seiner vertikalen Position montiert ist, wobei dieser Schwinghebel (38) ein Ende umfaßt, das in der Nähe der Abzweigung (18) angeordnet und mit einem Magneten (54) versehen ist, so daß die Verschiebung des Schwinghebels (38) unter der Wirkung der Kraft, die auf den Behälter (10) einwirkt, durch magnetische Anziehung die Verschiebung des Verteilers (36) in die der Kraftrichtung entgegengesetzte Richtung hervorruft.

2. Vorrichtung nach Anspruch 1, dadurch gekennzeichnet, daß die Anschlußenden der Nebenansaugleitungen (20A, 20B) kreisförmige Innenquerschnitte aufweisen und daß der Verteiler (36) eine Scheibe (40) umfaßt, die in ihrem Zentrum auf einer Stange (42) montiert ist, deren Enden auf beiden Seiten der Scheibe in Lagern (44, 46) gleitend montiert sind, welche durchbrochen sind, um den Durchfluß des Treibstoffes zu ermöglichen, und in den Anschlußenden der Nebenansaugleitungen (20A, 20B) befestigt sind.

3. Vorrichtung nach Anspruch 1 oder 2, dadurch gekennzeichnet, daß jede Ansaugöffnung (22A, 22B) von einer Einfassung (24A, 24B) umgeben ist, die mit dem übrigen Behälter (10) in Verbindung steht und einen Treibstoffspeicher bildet, und daß sie ferner eine Hauptförderleitung (28) für den nicht verbrauchten Treibstoff umfaßt, die durch eine Abzweigung (30) an zwei Nebenförderleitungen (32A, 32B) für Treibstoff angeschlossen ist, um diesen Treibstoff in im wesentlichen gleichen Durchflußmengen in die Nebenförderleitungen (32A, 32B) zu verteilen, wobei die Nebenförderleitungen (32A, 32B) freie Enden umfassen, die in das Innere der Einfassungen (24A, 24B) münden, um diese letztgenannten mit Treibstoff zu versorgen, unabhängig von der auf den Behälter (10) ausgeübten Kraft.

4. Vorrichtung nach einem der vorhergehenden Ansprüche, dadurch gekennzeichnet, daß die Nebenleitungen (20A, 20B) und die Hauptleitung (16) zum Ansaugen von Treibstoff miteinander durch eine T-förmige Abzweigung verbunden sind.

5. Vorrichtung nach einem der vorhergehenden Ansprüche, dadurch gekennzeichnet, daß die Neben- (32A, 32B) und Hauptförderleitungen (28) für den Treibstoff miteinander durch eine T-förmige Abzweigung verbunden sind.

6. Vorrichtung nach einem der vorhergehenden Ansprüche, dadurch gekennzeichnet, daß die Ansaugöffnungen (22A, 22B) von Sieben (26A, 26B) umgeben sind, um den Treibstoff zu filtern.
